# EUROPEAN PATENT SPECIFICATION

(11) **EP 1 699 303 B1**
(45) Date of publication and mention of the grant of the patent: **10.08.2011**
(21) Application number: 05704539.5
(22) Date of filing: 07.01.2005
(51) Int. Cl.: A23L 1/318, A23B 4/18, A23L 1/39, A23L 1/00

(54) **MEAT MARINADE COMPRISING FAT AND PROTEIN**
FETT UND EIWEISS ENHALTENDE FLEISCHMARINADE
MARINADE POUR VIANDE À BASE DE MATIÈRES GRASSES ET DE PROTÉINE

(30) Priority: 08.01.2004 EP 04075059
(43) Date of publication of application: 13.09.2006
(73) Proprietor: Van Goor's Slagerij V.O.F., 7921 AE Zuidwolde (NL)
(72) Inventor: VAN GOOR, Johann, Wilhelm, NL-7921 AE Zuidwolde (NL)
(74) Representative: van Loon, C.J.J.
(86) International application number: PCT/NL2005/000008
(87) International publication number: WO 2005/065469

(56) References cited:
- EP-A- 0 576 726
- EP-A- 0 704 160
- WO-A-00/65937
- FR-A- 2 503 540
- FR-A- 2 664 794
- US-A- 3 506 455
- US-A- 5 026 572
- US-A- 5 232 723
- US-A- 5 262 190
- US-A- 5 738 891

## Description

This invention relates to a process for improving the texture and juiciness of a meat product intended for cooking, among others of those intended for cooking at high temperatures. In particular, the invention relates to a novel marinade for improving the tenderness and mouthfeel of a meat product. The invention also relates to snack-size, optionally marinated, meat pieces.

During cooking of meat, especially at high temperatures, for instance deep-frying, water is exuded from the meat in considerable quantities. The texture of the meat thus becomes dry, heterogeneous and hard. Also, the meat yield diminishes as a result of the exudation (dehydration). To prevent these disadvantages and to obtain the desired tenderness and juiciness with an improved yield, polyphosphates are generally incorporated in the raw meat, typically in the form of a marinade. Marinades can add to tenderness and juiciness through retention of juices during storage and cooking. Marinades based on polyphosphates, including pyrophosphate, triphosphate, and metaphosphate, have a high buffering capacity at neutral to alkaline pH (pH 6.5 to 9.0) due to their polyanionic characteristics. US Patent 3,104,978 discloses the use of hydrated crystalline and glassy phosphates in meat curing compositions. US Patent 3,104,170 teaches that fresh or precooked poultry may be better preserved in the cooked state by soaking the uncooked poultry in sodium or potassium polyphosphates. The preferred polyphosphate is tripolyphosphate, but pyrophosphates and hexametaphosphates are also useful. In US Patent 3,689,283 a mixture of sodium tripolyphosphate and 10% sodium hexametaphosphate is preferred. US patent 3,462,278 teaches cooking old poultry (more than 10 months old) in a solution of the same alkali metal polyphosphates. US Patent 3,573,062 teaches that coarsely chopped muscle meat can be bonded with polyphosphates to fabricate cuts of meat. EP0397590 discloses a clear, aqueous polyphosphate solution suitable for injection into meat products. Injection or infusion of pyrophosphates increases the pH of meat and improves meat quality by assisting solubilization of myosin and increasing uptake and retention of water. However, polyphosphate addition is unpopular among consumers because, although the polyphosphates retain water during cooking and ensure the desired tenderness, they generally conceal the desired fibrous texture of the meat, giving it a texture and sensorial characteristics of patty-type products, like sausages. In addition, the use of polyphosphates to avoid dehydration and hardening of the meat is being increasingly opposed at the nutritional level. Thus, there is a clear need for alternative meat marinades which do not rely on polyphosphates and which are capable of preserving the tenderness and juiciness of (cooked) meat products.

It has now been found that a surprisingly good meat tenderisation is achieved if, prior to cooking, a meat product is treated with a marinade as described in claim 1 comprising a fat and protein. Without wishing to be bound by theory, it is believed that the fat and protein in a marinade according to the invention are absorbed by the meat such that, due to the softening effects of the fat and the water-retaining capacity of the protein, the original juicy and tender structure of the meat is retained, even during cooking at high temperatures such as deep-frying.

Provided is a meat marinade comprising a fat and a protein, wherein said fat is present in said marinade in an amount of 0.5-10 percent by weight (w%) of the marinade such as 1-5 w%. The protein content of a marinade of the invention is 0.05-10 w% of the marinade, preferably 0.8 -6 w%, more preferably 1-5 w%.

The term 'marinade' as used herein refers to a liquid composition that is ready to treat meat, typically before the meat is cooked or otherwise prepared for consumption, to tenderise and/or flavour the meat.

It will be understood that the marinades within the scope of the invention can be of very different composition. Generally speaking, the higher the fat content, the lower the protein content can be to still obtain good tenderising results. For example, a marinade with 10%w fat and only 1-2% protein was found to be useful for the treatment of a piece of meat. Vice versa, a relatively low-fat content (up to 5% or even lower) can be compensated by a medium or high protein content. A person skilled in the art will be able to choose the optimal fat and protein content of a marinade for a particular circumstance. This can depend not only on the type of meat, the size of the meat to be treated, but also on the consumer of the marinated meat product who may prefer a 'light' product that is relatively low in fat.

A marinade that is relatively high in fat (e.g. 10-20w%) may be used for marinating a piece of meat selected from the better cuts low in fats and in collagen, for example tenderloin, loin, kernel of pork or veal, breast of chicken or turkey. In another embodiment, a poorer cut containing more fat and collagen, for example neck of beef, veal, lamb or mutton, chopped kernel of pork, knuckle of beef, veal, pork, lamb or mutton, drumstick or thigh of chicken or turkey, is marinated with a marinade that is relatively low in fat (e.g. less than 10w%)

The Examples below illustrate the production and use of various marinades, for instance a marinade containing either 3.5% fat and 4.5% protein; 10% fat and 4-4.5% protein; 10% and 1.4% protein; 2% fat and 6-7% protein or 7.5% fat and 4-4.5% protein. However, it will be understood that the fat and protein content can be varied within the scope of the invention.

Also within the scope of the invention are marinade concentrates, either liquid or solid (e.g. powdered or pulverized) which need to be diluted or otherwise reconstituted with a suitable liquid to yield a marinade of the invention that is ready for use. The use of a marinade concentrate is usually more practical in terms of shipping and storage. For example, a liquid marinade concentrate is provided comprising around 40w% fat and 20-25w% protein such that upon a four- or five-fold dilution a marinade of the invention comprising 8-10% fat and 4-6% protein can be obtained. Of course, a marinade concentrate may contain additional components such as flavouring agents, stabilisers, etcetera.

The fat in a marinade can be an animal fat or a plant fat, also referred to as a vegetable fat. An animal fat is generally high in saturated fatty acids. Suitable animal fats comprise milk fats and fish fats. Fats are made up of three elements, carbon, oxygen and hydrogen. These elements can make up molecules of fatty acids and glycerol, which combine to form fat molecules known as triglycerides. There are at least 40 different fatty acids. Triglycerides make up to 98% of total milk fat by weight. A marinade of the invention may comprise saturated or unsaturated fatty acids as fat. Preferably unsaturated fatty acids are used e.g. omega-3 or -6 fatty acids, which can for example be found in fish fat.

Useful vegetable fats also comprise fats and oils of vegetable origin, e.g. those used for cooking, such as coconut fat, olive oil, cottonseed oil, corn (maize) oil, sesame oil, linseed (flax) oil, sunflower oil, palm oil and the like. Oils and fats vary in both their appearance and individual properties due to the differences in the types and proportions of the various fatty acids present. Although chemically similar, a fat is solid or semi-solid at 'room' temperature, while an oil remains liquid. Of course, a marinade as provided herein may comprise a mixture of different types of fats.

Likewise, the protein can be an animal protein or a protein of plant or vegetable origin, or a mixture of different proteins. Examples of useful proteins are milk protein, including whey proteins, and soy protein. Milk protein consists of casein (β-casein,αs1-casein, αs2-casein, κ-casein), whey proteins (β-lactoglobulin, α-lactalbumin, immunoglobulins, bovine serum albumin, Glycomacropeptide). Other minor proteins include as lactoferrin and enzymes (e.g. lactoperoxidase). Casein, the principal protein of milk, is that fraction of raw skim milk which is precipitated by acidifying to pH 4.6 - 4.7. It comprises about 80% of the protein of milk, the amount present in milk varying from about 2.6 to 3.4%, depending upon the breed of cow that produced the milk. It is present in milk as a colloidal suspension of complex particles called micelles. In one embodiment, a marinade comprises casein or a caseinate. Casein is very high in the amino acid glutamine. Like many other nutritional compounds, casein is typically bound to a metal since the molecule is more stable this way. Specifically, casein is most commonly bound to calcium or sodium since both of these metals are found naturally in milk, and tend to "stick" to the casein during the extraction process. Nutritionally, these calcium caseinate and sodium caseinate are basically interchangeable, as both forms of caseinate are effective protein sources. such as sodium caseinate. It is known that sodium caseinate can act as an emulsifier for fat, which property can be beneficial in a marinade according to the invention.

The protein in a marinade according to the invention may be stabilized, for example by heat treatment such as ultra high temperature (UHT) treatment. In another embodiment, a marinade comprises one or more proteins that have beneficial effects on the properties of the marinade, e. g. to improve the stability or shelf-life of the marinade. Examples of such beneficial proteins are anti-bacterial proteins. Also, proteins can be used that have a tenderising effect on the structure of the meat prodcut to be treated with the marinade, for instance a hydrolytic enzyme like a protease or a peptidase. Preferably, the protein present in a marinade is of food-grade quality.

In one embodiment, a marinade comprises a milk fat and/or a milk protein. These marinades are conveniently prepared using a dairy product that contains milk fat and/or milk protein. Dairy products are made of milk from a mammal, such as a cow, a sheep, a goat or a horse. The average gross composition of cow's milk is approximately 3.7 percent fat, 3.3 percent protein, 4.7 percent lactose, 0.7 percent ash and 87.6 percent water. Sheep milk is relatively rich in fat and protein with a fat content of approximately 6.5-7.0% and a protein content of around 5.5%. The protein and fat content of goat milk are roughly comparable to that of cow milk, about 2.9% and 3.9%, respectively. Compared to other suitable dairy products, cow's milk products can be most easily commercially obtained at relatively low costs. A marinade therefore preferably comprises a cow's milk product, optionally diluted with a liquid (e.g. water) to achieve the desired fat- and protein content. During the industrial separation of whole (cow's) milk, there are generally two streams produced: the fat-depleted stream, which produces among others the low-fat beverage milks, and the fat-rich stream, the cream. This usually comes off the separator with fat contents in the 35-45% range. A product known as 'plastic' cream can be produced from certain types of milk separators, which has a fat content approaching 80%. For retail cream products, the fat content is normally standardized to around 35% (heavy cream for whipping), 18-20% or 10% (cream for coffee or cereal). Higher fat creams are also produced for retail sale, e.g. a product known as double cream has a fat content of 55%. A marinade in accordance with the invention may comprise a (diluted) milk product from the fat-rich stream. For example, it is selected from the group consisting of cream, double cream, whipping cream, whole milk, half and half cream (milk cream) and whole evaporated milk. Suitable fat- and protein-containing milk products for use in a marinade comprise those routinely used for cooking, more specifically those used to prepare (cream) sauces. Especially suitable products are commercially available, for instance a milk product referred to as "cooking cream" or "cook's cream". Cooking cream has a fat content of approximately 20% and can be used for the preparation of hot or warm dishes, sauces and soups. Cooking cream is acid stable and does not curdle. For example, a marinade according to the invention may be prepared using a commercial available cooking cream, which typically contains about 98% cream, about 20% fat, and modified starch, stabilisers and emulsifier. Another commercial available product contains about 2.5 gr protein, about 5.0 gr carbohydrates and about 20 gr fat per 100ml. Also suitable are milk products, which are based on a mixture of cow's milk and vegetable fat and have a fat content in the range of 15-20%, and which now are sold for frying.

In another embodiment, a whey protein concentrate (WPC) is used as a protein source in a marinade according to the invention. WPC is manufactured by drying the material resulting from the removal of sufficient non-protein constituents from pasteurized whey so that the finished dry product contains 25% or more protein. The non-protein constituents are removed by physical separation techniques such as precipitation, filtration, or dialysis. Safe and suitable pH-adjusting ingredients may be used to adjust the acidity of WPC. There are several industrial methods suitable for selectively concentrating whey. The most commonly used method is ultrafiltration, where low-molecular weight compounds such as lactose, minerals, non-protein nitrogen and vitamins are filtered from the whey to the permeate, and the proteins are concentrated in the retentate. Industrially produced WPC's belong to either one of the categories of low-protein WPCs (protein content 25-40%), medium-protein WPC (protein content 45-60%) and high-protein WPC (protein content 60-80%). In one embodiment, a WPC referred to as WPC-80 or UF(Ultrafiltrate)80 containing 80% protein is used to prepare a marinade of the invention, for example in combination with cook's cream as a source of fat and a minor source of protein.

The use of a milk or dairy product for marinating and/or pickling meat has been previously reported. Usually, it comprises the use of yoghurt or other fermented milk products. For example, US patent 6,582,751 reports injection of a meat product with a liquid fermented milk product. EP0442361 discloses incorporation of denatured milk serum (whey) proteins into the meat to improve its texture. Fermented milk products are for example yoghurt, buttermilk, soured cream milk, soured milk, fermented whey, kefir and crème fraiche. When used for marinating meat, the pH of the fermented milk product is typically in the range of 4.8-5.1. By maintaining the pH of the treated product as a whole above the isoelectric point of the meat, the loss of moisture and water from the product is minimised. In contrast, a marinade of the invention does not rely on this pH mechanism by using a (low pH) fermented milk product but, instead, it is based on the incorporation of fat and protein into the meat. What is more, it preferably comprises a non-fermented milk product because marination with a fermented milk product would add an unpleasant, sour taste to the meat.

Meat marinades comprising milk protein are known. For example, Shand and McCurdy investigated the effect of milk protein on salt/phosphate-based marination systems (Meat Marketing and Technology, 1996, 4(1) and Proceedings of the 41st Annual International Congress of Meat Science and Technology, San Antonio, August 1995, Volume 2). The marinades under investigation did not contain any fat. It was concluded that the addition of milk protein hydrolysate had a toughening effect on pork. These findings underscore that presence of a fat as well as a protein in a marinade of the invention is important to achieve the desired tenderness and juiciness of the meat. Surprisingly, it is shown herein that a meat marinade comprising both a milk protein and a (milk) fat give very good results.

Meat marinades comprising fat and protein are also known. WO00/65937 discloses a multifunctional marinade for meat or fish comprising a flavoring agent, a browning agent and a partially hydrogenated fat. Optionally, a texture improving agent can be added in the form of starch and at least one of egg white powder or whey protein isolate. The marinade can be in the form of a dry powder or in a liquid form, for example a water-in-oil emulsion or an oil-in-water emulsion. An exemplary dry marinade of WO00/65937 comprises 27% protein (gelatin, SUPRO660, egg white powder and whey protein concentrate; see Tables 3 and 4) and 28.09 % fat in the form of partially hydrogenated soybean oil. In case of a liquid marinade, it is stated that oil may be present in an mount of 5-75 percent by weight of the liquid marinade. An Example of a liquid marinade (see Table 5) comprises 53.26 w% fat but no protein. Thus, whereas WO00/65937 discloses marinades comprising fat and protein, the fat content of the exemplifying marinades is much higher than the fat content of a marinade of the present invention. Moreover, marinades of WO00/65937 always require the presence of starch if a protein is present. In contrast, a marinade of the invention comprising fat and protein is free of starch.

The French patent application FR 2664794 describes a method to prepare and conserve flesh of aquatic animals wherein the flesh, after being salted, is soaked in a marinade comprising a) fatty acids, b) vinegar and c) a dairy product, and optionally d) a fruit juice. As a result, the flesh can be conserved for prolonged periods. Components a) through c) may be present in a relative amount of 1 to 90%. The exemplary marinade according to FR 2664794 comprises 30% walnut oil and 15% crème fraiche. A marinade with a fat- and protein content as provided in the present invention is however not disclosed. Furthermore, the French publication only relates to conserving marinades for flesh aquatic animals, whereas the present invention discloses marinades to promote the texture and juiciness of a meat product intended for cooking, wherein said meat is typically derived from land animals or birds (i.e. poultry). Our finding that a marinade as defined herein has such beneficial effects on meat products cannot be derived from the teaching of FR 2664794. The properties of meat are obviously very different from those of flesh of aquatic animals. Marinades suitably used to conserve flesh of aquatic animals may thus be unsuitable as marinade to tenderize meat products.

US 5,738,891 does not relate to marinades yet describes a high temperature cooking sauce for fully cooking food or adding to cooked food or for imparting a golden brown "au gratin" coating upon cooking. The sauce includes 10-65 wt% edible fat, preferably 20-40 wt%; 0.05-10 wt% caseinate and 0.1-10 wt% browning agent, which can be carbohydrates, proteins and mixtures thereof. A meat marinade according to the invention with a fat content as low as 10wt% is not disclosed in US 5,738,891.

In one embodiment of the invention, a marinade comprises a fat- and protein-containing milk-free substitute. An advantage of such a marinade is that it suitable for consumption by people with cow's milk allergy, also known as lactose intolerance. Cow's milk is a common cause of food allergy in children. Around 1 in 50 babies are allergic to cow's milk and dairy products. Although most children out-grow cow's milk allergy by the age of 4 years, persistent milk allergy may sometimes occur. Treatment of cow's milk allergy involves elimination of cow's milk and its products from the diet and, if possible, substitution with an appropriate milk-(protein) free product. Another milk-related disorder in humans is lactose intolerance. Lactose intolerance is the inability to digest lactose, a type of sugar found in milk and other dairy products. Lactose intolerance is very common in adults and is not dangerous. Many adults have some degree of lactose intolerance by age 20 (approximately 30 million Americans). The symptoms include diarrhoea, vomiting, stomach pain and gas, which are similar to some of the symptoms of milk allergy. This condition is uncomfortable but not dangerous, and does not cause rashes or anaphylaxis. Treatment involves avoidance of dairy products containing lactose and substitution with a lactose-free milk. A cow's milk-free or lactose-free meat marinade according to the invention comprises a fat- and protein- containing plant-based product, preferably a soy-milk based product. A suitable commercially available fat-containing plant-based product contains about 18% vegetable fat and about 2 % soy protein but it does not contain any cow's milk protein. Other suitable cow's milk substitutes may be based on rice milk, oat milk, almond milk, sesame milk, coconut milk, goat's milk and sheep's milk and horse's milk.

When using a milk product for preparing a marinade of the invention, (traces of) the white colour of the milk product will be apparent in the marinated meat product. In many cases, e.g. when marinating so-called white meat (e.g. poultry), or when marinating any type of meat which is subsequently covered with a breading mixture, the white colour of the marinated meat product does not affect the attractiveness of the meat. However, in other cases, for example when marinating a piece of beef which should retain its natural colour, it is preferred to use a meat marinade that does not leave a white glaze on the meat. In one embodiment, a marinade of the invention is colourless, i.e. essentially transparent. A transparent meat marinade according to the invention is easily prepared by mixing suitable amounts of fat and protein (see section above). In a specific aspect, a marinade comprises a transparent milk product recently developed (as described in EP-A-1 399 028) or one or more active ingredients thereof which make milk products colourless. Clusters of milk proteins (in particular caseine) are thought to be responsible for the white appearance of milk. In one embodiment, a marinade comprising a dairy product further comprises an active ingredient capable of disrupting milk protein clusters to obtain a colourless marinade. Disruption of protein clusters may be achieved by sequestration of calcium phosphate.

The pH of a marinade or marinade concentrate is preferably such that in use the pH of the marinated meat is below 7. At pH 7 or higher, the marinated meat product tends to attract moisture, thereby promoting bacterial growth. The pH of meat is typically within the range of 5 to 6. Thus, the pH of the marinade preferably influences the pH of the meat product to a minimal extent. Accordingly, the pH of a marinade (concentrate) is preferably within the range of pH 5 to pH 7.

In yet a further aspect, a marinade comprising fat and protein also comprises starch. The presence of starch in a marinade may contribute to stabilization of moist (water) present in a meat product, thereby preventing excessive exudation during heat treatments, for example cooking or frying.

In a further aspect of the invention, a method is provided for preparing a meat marinade according to the invention. In one embodiment, a liquid marinade is prepared by mixing the components the marinade, i.e. a liquid, a fat and a protein and optionally a flavouring agent. Furthermore, an emulsifier may be included in the marinade to aid in dispersing fat in a water-based marinade. Suitable emulsifiers include those commonly used in the food industry, for example egg yolk or lecithin. Also, certain proteins in WPCs have good emulsifying properties.

According to the invention, a marinade may further comprise a flavouring agent. Said flavouring agent, when present in the marinade, can be any ingredient which imparts flavour or taste to the marinated meat product. Flavouring agents useful in the invention include flavour extracts, flavour concentrates, flavour enhancers, seasonings, herbs, spices, salt, pepper, onion powder, garlic powder, savoury powders and commercially available flavourings, such as barbecue, cajun and teriyaki. The flavouring agent can be in a dried (powdered or pulverized) or liquid (e.g. oil-based). As said, it is most convenient when preparing a marinade according to the invention to use a commercial liquid product that contains both the desired protein and fat components, for example a (cow's milk) dairy product or a substitute thereof. Depending on the fat- and protein content of the product, it can be diluted with a liquid, such as water, to achieve a marinade with the desired fat- and protein content. In one embodiment, cooking cream is used to conveniently provide the marinade with protein and fat. Because cooking cream contains approximately 20% fat and approximately 2.8% protein, it may be further diluted with water. For example, the cooking cream can be mixed with about an equal volume of water to yield a marinade according to the invention comprising about 10% fat and about 1.4% protein. It will be clear that other dairy products can be diluted according to the same principle. On the other hand, products which have a fat- and protein content that lies within the range of a marinade according to the invention may be used as such without any dilution.

A marinade according to the invention can also be prepared by reconstituting a powdered marinade comprising fat and protein, and optionally a flavouring agent, with a liquid. For example, the powdered marinade is mixed with a suitable amount of water to achieve a marinade with the desired fat- and protein content.

In yet a further embodiment, the invention provides a method for improving the tenderness of a meat product, comprising contacting said meat product with a marinade according to the invention. Said contacting, also referred herein as "marinating", comprises churning, mixing, tumbling or agitating said meat product with the marinade. It is also possible to inject a meat product with a marinade, optionally followed by tumbling the injected meat product. Also provided are meat products that have been marinated with a marinade according to the invention.

The meat product may be any type of meat product, including a monolithic piece of meat as well as mechanically processed meat, for example minced or comminuted meat and meat emulsions. The term 'monolithic' embraces whole muscle pieces of meat, as well as smaller, but nevertheless recognizable pieces such as natural butcher cuts, slices and strips of meat and cubed or diced meat. A cubed piece of meat refers to meat which is cut into small square pieces. Diced meat refers to tiny, 1 cm³ or smaller pieces or cubes. In a preferred embodiment, said meat product is a monolithic piece of meat, that is a piece of meat that retains its natural structure and consistency. Explicitly included are chopped pieces of meat, i.e. meat cut into (nearly uniform) bite-size or snack-size pieces which can be served at a party or as a snack. These can have any shape or form, for example the shape of a nugget or a finger. Preferably, a small piece of (marinated) meat is achieved by sectioning a larger piece of (marinated) meat into smaller sections such that there is a minimal loss of meat in the form of meat scraps and trimmings. This can be achieved by cutting up a monolithic piece of meat into (uniform) smaller pieces along essentially straight, i.e. non-curved, lines. Preferably, the cutting lines are parallel. For instance, a roughly rectangular piece of meat is cut into smaller pieces which have four corners, e.g. which have a shape resembling a square, a rectangle or a parallelogram. For example, meat is cut into pieces with a length of 2.5-5 cm, a width of 1.5-3 cm and a thickness of 0.3-1 cm. Of course, it is also possible to cut the meat into three-cornered pieces, i.e. triangular pieces. Cutting can be performed manually or mechanically. The invention herewith provides for a piece of meat, preferably a bite-size or snack-size piece of meat, which has at least two essentially, preferably at least three, preferably four straight sides. Said bite-size or snack-size piece of meat typically has a volume of 1-50 cm3, preferably 2- 20 cm3, more preferably 2.5-10 cm3. A bite-size or snack-size piece of meat can be obtained from a single i.e. monolithic piece of meat. For example, the invention provides bite-size pieces of beef, also called 'beef-chips'. Likewise, the invention provides 'pork-chips', 'chicken-chips' and 'schnitzel-chips' (see below) that are characterized by their shape and volume. Alternatively, it can be composed of at least two distinct types of meat. In one embodiment, the invention provided a snack-size meat product composed of meat obtained from different sources, for example from different body parts of an animal or from two or more distinct animals. For example, chicken breast and pork chops are processed to yield a large composite meat product which product is then cut or diced into smaller bite-size meat pieces. In one embodiment, a composite meat product is prepared by mixing meat cuts from various types of meats together with one or more additives, such as fibrinade supplied by Raps (RAPS GmbH & CO. Kulmbach, Germany). The meat mixture can then be formed into uniformly sized composite meat pieces which can thereafter be cut into smaller, preferably snack-size, meat products. The piece may be marinated or not and/or it may be breaded or not. Breading adds a crisp coating to fried foods. Breadcrumbs can be used, but crumbs from crackers, breakfast cereals (cornflakes), melba toast, matzos, pretzels, and corn chips are also suitable. To bread meat, the meat product is typically first dried and then dusted with a light coating of flour. Next, the meat is dipped in a mixture of eggs mixed with a little milk, water, or oil, followed by dredging the wetted meat in the breading mixture. Suitable breading mixtures are those known in the art, which are commercially available in many colours and crump sizes. In one embodiment, a breading mixture comprises a browning agents that gives the cooked meat product an attractive colour.

In one embodiment, said snack-size piece of meat has been treated with a marinade, preferably a marinade of the invention. Small pieces of meat are relatively prone to losing water during cooking at high temperatures, such as during pan frying or deep frying. This is because of a higher surface to volume ratio when compared to larger pieces of meat. Thus, a marinade according to the invention is advantageously used to improve the tenderness of a relatively small piece of meat. Also included are reformed pieces of meat, such as steaks.

As said, any kind of meat product can be marinated with a marinade as provided herein. The meat product is for example a pork, beef, lamb, game, mutton, veal or poultry meat product. The meat product may be boneless or it may contain bones. In a preferred embodiment, it is a boneless meat product. The marinade according to the invention gives the meat product a soft and rich mouthfeel, and is therefore particularly advantageous for marinating meat products which have from itself, especially after cooking, a relatively dry structure, e.g. meat products with a low fat content. Furthermore, a meat product that has been marinated with a marinade as provided herein does not have the watery and spongy mouthfeel and the taste of phosphates as is encountered when using conventional phosphate-based marinades. In fact, a marinade according to the invention comprising fat and protein, but not comprising polyphosphates, can be used to improve the texture and taste of essentially any type of meat.

In one embodiment, the invention provides a method for tenderising a meat product called "schnitzel'. Schnitzel is the German word for "cutlet" and typically refers to a piece meat that is dipped in egg, breaded and fried. Wiener Schnitzel is a veal cutlet prepared in this manner. In a preferred embodiment, bite-size schnitzel-type meat products are marinated with a marinade according to the invention, in particular small pieces of schnitzel

(also known as "schnitzel chips") made of pork meat. In another preferred embodiment, an intact meat cutlet is first marinated and thereafter cut into smaller pieces. Marination can be conveniently achieved by injecting said meat with the marinade (see below).

Treatment with the marinade is preferably carried out at a low temperature of 0°C to 10°C. If a frozen meat product is to be marinated, it is preferably first warmed to a temperature of -3°C to 4°C. Meats are marinated by either of two methods. In one embodiment, marinating a meat product with a marinade of the invention comprises mechanical processing. Herein, a meat product is churned, mixed, tumbled or agitated with a fat-and protein-containing marinade as provided herein, preferably until the marinade is absorbed by the meat product. The meat can be placed into a tumbler, the marinade added, and the meat pieces tumbled, optionally under vacuum, until they absorb the solution. Equipment for the mechanical processing may simply comprise a rotary tumbler, preferably equipped with a vacuum pump, in which the meat product to be marinated can be tumbled in the presence of a suitable amount of a marinade according to the invention. In one embodiment, a meat product is contacted (e.g. tumbled) with an amount of marinade of around 10-50 per cent by weight (w%) of said meat product, preferably around 15-40 w%, more preferably around 15-30 w%. Preferably, an amount of marinade is chosen which can be at least partially absorbed by the meat, more preferably an amount which can be fully absorbed by the meat. For example, 100 kg of meat, preferably cut into pieces, is tumbled with 25 litre of a fat-containing meat marinade according to the invention to provide the meat with a tenderising marinade. Thereafter, any non-absorbed or excess marinade can be collected and re-used for a subsequent meat treatment. Said tumbling may be performed for various periods of time, depending on the tumbling speed and the type and/or size of the meat. Especially with relatively small (e.g. bite-size) pieces of meat, tumbling is a preferred method of contacting meat with a marinade according to the invention.

In another embodiment, the marinade is injected into the meat, for example using a single needle injector or a multi-needle injector. A suitable multi-needle injector is the injector that is commercially available from Möller and Co. under the trade name Pökelmat. The marinade may be injected at a pressure of about 0.9 to 3.0 bar, depending on the type of meat and injection rate. The meat may be injected more than once. In some embodiments, the meat may be injected using tenderising needles. The injected marinade may be distributed further throughout the piece of meat by mechanically tenderising and/or tumbling. As a further advantage, the mechanical processing of the meat assists in disrupting the structure of the meat, especially proteins, which may thus be opened. As a consequence, the liquid marinade as well as free water within the meat become properly incorporated within the meat structure. The injection method delivers rapid, deeply infused marinade solutions, evenly dispersing them throughout the cut. The thinner the cut, the more rapidly dispersion of the marinade will occur. Some manufacturers follow the injection with a tumbler step to more rapidly achieve marinade dispersion in thicker cuts.

The surface area of the meat and the condition of the meat cut have a large effect on the marinade process, as the area determines the relative uptake of the marinade. The muscle structure varies between different types of meat, yet the greater the exposure to the solution, the more efficient the absorption will be. Cut steaks or kebabs present a greater surface area, and thus will require less marinating time. Large cuts of beef, such as roasts, can be injected with marinade and then tumbled for optimum marinating. The beef can then be cut into sections. Systems combining rapid injection, followed by a vacuum tumbling, are capable of turning out products at a relatively high rate and quality. Equilibration of the marinade within the meat is reached most efficiently with this technique, although injection systems are expensive and costly to maintain. The combination of injection and tumbling yields a well-balanced marinade profile in the product. The injection method, by itself, is most efficient in terms of time and cost savings.

Typically, skinless and boneless pieces of meat (e.g. chicken breasts) can be tumbled, because they are thin and relatively absorbent. Meat pieces with bone and skin are easier to treat with injection. For instance, chicken wings are often injected, due to the ease of the operation. The injector systems have spring-loaded needles, so if bones are encountered, needles won't break.

Optionally, following marinating the meat product, it is left to stand for a certain period of time such that the marinade is distributed even further throughout the piece of meat. For example, pieces of meat which have been tumbled for 5-10 minutes are thereafter left to stand for several hours. The marinated meat product is preferably left to stand at a temperature of 0°C to 10°C.

It has been found that by contacting a monolithic piece of meat with a marinade according to the invention, using either injection and/or mechanical processing, the pores and cavities within the meat become filled with the fat- and protein-containing marinade. If higher proportions of marinade are used, the piece may become essentially saturated with marinade. The invention thus provides a meat product having improved tenderness and organoleptic (mouthfeel) properties. Meat marinated and processed in accordance with the invention will typically remain tender and juicy after cooking.

The marinated meat product may be directly packaged, refrigerated, frozen or even sterilized. The product may be marinated and optionally cut prior to packaging, freezing or refrigerating. As a further alternative, the product may be coated or breaded and then packaged. In yet another embodiment, the marinated meat product is at least partially cooked prior to packaging. Depending on the type of meat and the size of the pieces, cooking of a marinated meat product may be brief or prolonged or may even be carried out under pressure. Cooking comprises grilling, steam cooking, oven cooking in a conduction or a convection ovens, deep-frying, pan frying and microwaving.

Also provided herein is a meat product that is marinated according to the invention. Said marinated meat product may be a fresh meat product or a refrigerated or frozen meat product. Furthermore, a cooked or pre-cooked marinated meat product is provided herein. The marinated, pre-cooked meat product is essentially ready for consumption and only requires minimal further handling by a consumer or a retailer of the product prior to consumption of the product, for instance only a brief period of heating in a microwave oven.

A further aspect relates to the use of a marinade according to the invention to improve the tenderness and juiciness of a meat product.

The invention is illustrated by the following Examples. It is to be noted that the exemplary marinades can be supplemented with all types of additives and ingredients conventionally used in the field.

### EXAMPLE 1

In this Example five concentrated meat marinades (variants 1 through 5) were prepared using different sources of protein and fat (animal fat or vegetable fat) and subsequently subjected to a comparative performance test. In all cases except for the reference marinade, the marinades did not contain polyphosphates. Following dilution with water, the marinades were used to treat various types of meat. In parallel, meat was marinated with a conventional polyphosphate-based marinade. The marinated meat products were fried and judged by a consumer panel with respect to taste and mouthfeel.

The table below gives the final composition (in % weight) of the marinades tested.

| **Variant** | **1** | **2** | **3** | **4** | **5** | **6 (Ref.)** |
|---|---|---|---|---|---|---|
| | | | | | | |
| protein | 1.45 | 5 | 1.8 | 1.45 | 1.45 | 0 |
| Milk fat | 10 | 0 | 0 | 10 | 10* | 0 |
| phosphate | 0 | 0 | 0 | 0 | 0 | 3 |
| pepper | 2.5 | 2.5 | 2.5 | 2.5 | 2.5 | 2.5 |
| salt | 6 | 6 | 6 | 6 | 6 | 6 |

| | | | | | | |
|---|---|---|---|---|---|---|
| * fat from a vegetable source was used. | | | | | | |

A reference marinade ("Ref.") was prepared by dissolving 5.5 grams conventional "phosphate powder" (having phosphate and Na-glutamate as its main constituents) in 100 ml water. The reference marinade contained the following ingredients: flavour enhancers (E640, E621), salt, stabilisers (E450, E451, E452, E339), sugar, dried glucose syrup, anti-oxidant E330. One hundred grams of each marinade was used for 500 grams of meat. Variants 3, 4, 5 and 2 were used for marinating pork meat (schnitzel), variants 1 and 6 (Ref.) for marinating pork tenderloin, variants 1, 2, 3 and 5 for chicken; and beef strips were marinated with variants 1, 2 4 and 6. The marinated meat products were prepared for consumption by pan frying in vegetable fat.

A test panel of consumers made the following observations.
1. All marinades were quickly (1-2 minutes) absorbed by the meat products.
2. The colour of the meat product is not affected by the polyphosphate reference marinade and only a little bit by Variants 2 and 3. The other variants, containing 10% fat, give the meat a white glaze. The cream-based marinades are absorbed by the upper 1-2 mm of the meat, as well as by the veins.
3. All marinated meat products behave the same during frying.
4. The differences in taste and texture of the fried, marinated meat products is small. However, in all cases the variants comprising fat were judged more positively (better taste, juicier texture) compared to the fat-free variants 2 and 3. No difference was observed between coconut fat (variant 5) and milk fat.

These results show that all dairy products are suitably used in meat marinade. They are rapidly absorbed by the various meat products and do not exude more during cooking than conventional polyphosphate marinade. The presence of fat appeared important for the mouthfeel and taste of the end product. The influence of the protein content on the performance of marinades comprising 10 w% fat was less prominent.

### EXAMPLE 2:

In this example, the performance of three different marinades based on dairy products (variants A, B and C) was compared with a conventional polyphosphate marinade. All variants contained 6 %w NaCl. As a reference, a marinade was prepared by dissolving 3 grams sodium dipolyphosphate and 8 grams NaCl in 150 grams of water.

| | Fat (%w) | Protein (%w) |
|---|---|---|
| Variant A | 3.5 | 4.5 |
| Variant B | 10 | 4.5 |
| Variant C | 10 | 1.4 |

### Design of the study

The effects of the different marinades were evaluated using pig muscle (longissimus thoracic (LT)) obtained from the left- and right-half of 10 pig carcasses. They were selected based on normal meat quality (final pH = 5.44; electric conductivity (PQM) = 8.46 µS).

Per kilogram meat 150 grams marinade was used. For each marinade 5 LT muscles were marinated and analysed. Of each LT muscle, a part was left untreated as control.

### Process specifications

The marinades were contacted with the meat products using a multineedle-injection system, aiming for the injection of an amount of marinade corresponding to 16w% based on the piece of meat. Following injection any excess marinade was removed of added to obtain this value of 16 %w. The 5 pieces of meat were tumbled in the presence of one of the marinades under the following conditions: T = 4°C; 12 rotations per minute (rpm); t = 30 min.; angle 85°; non-vacuum. After the tumbling, excess marinade was removed from the tumbler. All the meat pieces were weighed, vacuum packed and stored at 4°C during 48h prior to analysis of the meat quality.

### Statistical analysis

The results obtained with the different marinades were statistically processed according to One-Way ANOVA with Bonferroni post-hoc test (SPSS release for Windows, version 10.0).

### Results

### - Measurements on fresh meat

All measurements on marinated meat products were performed in parallel on fresh, untreated meat.

### - Technological efficiency

The technological efficiency i.e. the percentage marinade effectively retained in the muscle after tumbling, was determined by comparing the difference in weight before and after marination. The values obtained for Variant A and B were significantly lower when compared to Variant C or the phosphate-based reference marinade.

### - pH measurements

- The pH (acidity) of the meat was determined using a glass electrode. PH measurements were performed directly following marination (injection + tumbling) as well as 48 hours after vacuum storage at 4°C. In all cases, no significant effect on the pH of the meat was observed.

### - Moisture retention

Loss of moisture was determined by measuring a difference in weight. The following moisture losses were determined:
a) Moisture loss due to vacuum packaging and storage at 4°C during 48h. This was determined using the intact (marinated) pieces of meat. After the vacuum storage period, the intact pieces of meat were sectioned into smaller pieces (cubes of 2.5 cm in each dimension) to determine the following moisture losses:
b) drip loss, due to hanging the pieces during 48 hours at 4°C
c) thaw loss, due to one freeze-thaw cycle
d) cooking loss, determined after standardised heating of the pieces.

Variant B shows a significantly reduced thaw loss compared to the other marinades. Although not significantly different, drip loss and cooking loss are also lower upon using Variant B.

### - Colour measurements

Colour measurements were performed by color spectrophotometry measurements (L*, a*, and b*; CIE, 1976) of the LT muscle pieces using a Hunter Lab Miniscan XE model 45/O-L with a C illuminant with a 10° observer (Hunter Associates Laboratory, Reston, VA). For more information see CIE. 1976. Supplement No. 2 to CIE Publication No. 15 (E-1.3.1). Recommendations on uniform color spaces-color-difference equations, Pyschometric Color Terms. Commission Internationale de l'Eclairage, Paris. The L* value represents the lightness of the sample. Longissimus muscles with a higher L* value would be lighter in colour. The a* values are chromatic coordinates representing a change from green to red colour. A higher a* value indicates a sample with more red colour. The b* values are also chromatic coordinates, representing a change in colour from blue to yellow. The higher b* value, the more yellow the sample is in colour.

Compared to the phosphate reference marinade, the dairy-based Variants B and C give rise to a significantly increased b*-value. The marinades did not affect the L*- or a*-values.

### - Tenderness measurements

Shear force measurements, giving a measure for the tenderness of the meat, were performed using a Lloyd Texture Analyser equipped with Warner Bratzler scissors. The meat pieces had undergone a standardised heat treatment prior to taking the measurements. It was observed that none of the Variant marinades gave rise to significant effects on the tenderness of the meat when compared to the reference phosphate marinade. However, meat pieces marinated with Variant B or C displayed a somewhat increased tenderness when compared to either the phosphate marinade or Variant A. This difference is probably caused by the increased fat content of Variants B and C (10 w%) relative to Variant A (3.5 w%).

Variant A was also tested on a piece of roast beef. A roast beef of 1465 grams was injected with Variant A to result in final weight of 1700 grams (16% weight gain). The marinated roast beef was heated in an oven of 90°C until a core temperature of 38°C was reached, followed by heating at 125°C to a core temperature of 43°C. After cooling down, the weight of the cooked roast beef was 1515 gram, i.e. an overall weight gain of 3,4%.

### EXAMPLE 3

Next, four polyphosphate-free marinades were prepared that were analysed with respect to their ability to reduce moisture loss during cooking and freeze-thawing. The marinades tested were as follows:

| | Fat (%w) | Protein (%w) |
|---|---|---|
| Variant D | 10 | 1 |
| Variant E | 5 | 2 |
| Variant F | 0.2 | 4 |
| Variant G* | 7.5 | 2 |

| | | |
|---|---|---|
| * this variant also contained approximately 1w% starch. | | |

Pieces of chicken filet were marinated with either one of the meat marinade Variants D, E, F or G using manual injection (approximately 10% based on the weight of the meat) and the weight of the pieces (6 for each marinade) was determined. Subsequently, the meat was first deep-fried and then place in a steamer. Steaming is a moist heat method of cooking. It results in tender and moist meat through the use of steam. When steaming meat, minimum shrinkage occurs, and it is one of the most healthy methods of cooking because no additional fat is used. Although water is used in this process as in boiling, the meat retains more of the nutrients because it does not sit directly in the water, preventing the nutrients from being leached out of the meat. Finally, the heat treated meat was cooled down and frozen to a temperature of -20°C. After each step of the procedure the weight of the meat pieces was determined. The results are given in the following Table:

| | | | | | | |
|---|---|---|---|---|---|---|
| Deep frying | temp before frying (°C) | | 1.5 | | 1.5 | |
| | temperature frying pan (°C) | | 175 | 175 | 175 | 175 |
| | frying time (min) | | 2 1/2 | 2 1/2 | 2 1/2 | 2 1/2 |
| | temp. after frying (°C) | ±25 | | | | |
| | | | | | | |
| Steamer | hot air (%) | | 10 | 10 | 10 | 10 |
| | steam (%) | | 90 | 90 | 90 | 90 |
| | temperature (°C) | | 110 | 110 | 110 | 110 |
| | steaming time (min) | | 16 | 16 | 16 | 16 |
| | core temp. (°C) | ±78 | | | | |
| | | | | | | |
| weight | before frying (6 pieces) | | 1.20 | 1.23 | 1.42 | 1.29 |
| | after frying | | 1.10 | 1.10 | 1.28 | 1.15 |
| | after steaming | | 1.03 | 0.99 | 1.10 | 0.99 |
| | after freezer | | 0.99 | 0.94 | 1.05 | 0.95 |
| | | | | | | |
| yield (%) | before frying = 100% | | 100.0 | 100.0 | 100.0 | 100.0 |
| | after frying (%) | | 91.7 | 89.4 | 90.1 | 89.1 |
| | after steamer (%) | | 85.8 | 80.5 | 77.5 | 76.7 |
| | after freezer (%) | | 82.5 | 76.4 | 73.9 | 73.6 |

## Claims

1. Marinated meat product, wherein the meat marinade comprises a fat and a protein, wherein said fat is a milk fat and present in an amount of 0.5-10 percent by weight (w%) of the marinade, and wherein said protein is present in an amount of 0.05 -10 percent by weight (w%) of the marinade, preferably 0.8 - 6 w%, more preferably 1-5 w%, and wherein the marinade does not contain starch.

2. Marinated meat product according to claim 1, wherein said protein is an animal protein.

3. Marinated meat product according to claim 1, wherein said protein is a plant protein.

4. Marinated meat product according to any one of claims 1 to 3, wherein said marinade comprises at least one dairy product, preferably a non-fermented dairy product.

5. Marinated meat product according to claim 4, wherein said dairy product is selected from the group consisting of cream, double cream, whipping cream, whole milk, half and half cream (milk cream), whey protein concentrate and whole evaporated milk.

6. Marinated meat product according to any one of claims 1 to 5, further comprising a flavouring agent, preferably a flavouring agent selected from the group consisting of favour extracts, flavour concentrates, flavour enhancers, seasonings, herbs, spices, salt, pepper, onion powder, garlic powder, savoury powders and commercially available flavourings.

7. Marinated meat product according to any one of claims 1 to 6, wherein said marinade is transparent.

8. A method for improving the tenderness of a meat product, comprising contacting said meat product with a marinade as defined in any one of claims 1 to 7.

9. A method according to claim 8, wherein said contacting comprises churning, mixing, tumbling or agitating said meat product with the marinade.

10. A method according to claim 8, wherein said contacting comprises injecting said meat product with said marinade, optionally followed by tumbling said meat product.

11. A method according to any one of claims 8 to 9, wherein said meat product is contacted with an amount of marinade of 10-50 per cent by weight (w%) of said meat product, preferably 15-40 w%, more preferably about 15-30 w%.

12. A method according to any one of claims 8 to 11, wherein said meat product is a pork, beef, lamb, game, mutton, veal or poultry meat product, preferably a monolithic meat product.

13. A method according to any one of claims 8 to 12, wherein said meat product is a fresh, a refrigerated or a frozen and thawed meat product.

14. A method according to any one of claims 8 to 13, wherein said meat product is in the form of slices, cutlets or cubes.

15. A method according to any one of claims 8 to 14, wherein said meat product is a bite-size or snack-size meat product

16. A method according to any one of claims 8 to 15, wherein said meat product is a monolithic piece of a schnitzel, preferably a schnitzel made of pork meat.

17. A method according to any one of claims 8 to 16, further comprising refrigerating or freezing said marinated meat product.

18. A method according to any one of claims 8 to 17, further comprising cooking said marinated meat product.

19. A method according to claim 18, wherein said cooking comprises grilling, steam cooking, oven cooking, deep-frying, pan frying or microwaving.

20. Use of a marinade as defined in any one of claims 1 to 7 to improve the tenderness of a meat product.

## Patentansprüche

1. Mariniertes Fleischprodukt, worin die Fleischmarinade ein Fett und ein Protein umfasst, worin das Fett ein Milchfett ist und in einer Menge von 0,5-10 Gew.-% der Marinade vorliegt, und worin das Protein in einer Menge von 0,05-10 Gew.-% der Marinade, vorzugsweise 0,8-6 Gew.-%, noch bevorzugter 1-5 Gew.-% vorliegt, und worin die Marinade keine Stärke enthält.

2. Mariniertes Fleischprodukt nach Anspruch 1, worin das Protein ein tierisches Protein ist.

3. Mariniertes Fleischprodukt nach Anspruch 1, worin das Protein ein pflanzliches Protein ist.

4. Mariniertes Fleischprodukt nach einem der Ansprüche 1 bis 3, worin die Marinade mindestens ein Molkereiprodukt, vorzugsweise ein nicht fermentiertes Molkereiprodukt umfasst.

5. Mariniertes Fleischprodukt nach Anspruch 4, worin das Molkereiprodukt ausgewählt ist aus der Gruppe bestehend aus Sahne, Doppelsahne, Schlagsahne, Vollmilch, Halb und Halbsahne (Milchsahne), Molkenproteinkonzentrat und Voll-Kondensmilch.

6. Mariniertes Fleischprodukt nach einem der Ansprüche 1 bis 5, weiter umfassend einen Aromastoff, vorzugsweise einen Aromastoff ausgewählt aus der Gruppe bestehend aus Aromaextrakten, Aromakonzentraten, Geschmacksverstärkern, Speisenwürzen, Kräutern, Gewürzen, Salz, Pfeffer, Zwiebelpulver, Knoblauchpulver, Pikantpulver und im Handel erhältlicher Aromastoffe.

7. Mariniertes Fleischprodukt nach einem der Ansprüche 1 bis 6, worin die Marinade durchsichtig ist.

8. Verfahren zum Verbessern der Zartheit eines Fleischproduktes, umfassend
Inkontaktbringen des Fleischproduktes mit der wie in einem der Ansprüche 1 bis 7 definierten Marinade.

9. Verfahren nach Anspruch 8, wobei das Inkontaktbringen ein Durchschütteln, ein Mischen, ein Rollieren oder ein Umrühren des Fleischproduktes mit der Marinade umfasst.

10. Verfahren nach Anspruch 8, wobei das Inkontaktbringen ein Injizieren des Fleischproduktes mit Marinade, wahlweise gefolgt durch ein Rollieren des Fleischproduktes umfasst.

11. Verfahren nach einem der Ansprüche 8 bis 9, wobei das Fleischprodukt mit einer Marinadenmenge von 10-50 Gew.-% des Fleischproduktes, vorzugsweise 15-40 Gew.-%, noch bevorzugter ungefähr 15-30 Gew.-% in Kontakt gebracht wird.

12. Verfahren nach einem der Ansprüche 8 bis 11, wobei das Fleischprodukt ein Fleischprodukt vom Schwein, Rind, Lamm, Wild, Hammel, Kalb oder Geflügel, vorzugsweise von einem monolithischen Fleischprodukt ist.

13. Verfahren nach einem der Ansprüche 8 bis 12, wobei das Fleischprodukt ein frisches, ein gekühltes oder ein gefrorenes und aufgetautes Fleischprodukt ist.

14. Verfahren nach einem der Ansprüche 8-13, wobei das Fleischprodukt in der Form von Scheiben, Koteletts oder Würfeln vorliegt.

15. Verfahren nach einem der Ansprüche 8 bis 14, wobei das Fleischprodukt als ein Fleischprodukt in Bissgröße oder Snackgröße vorliegt.

16. Verfahren nach einem der Ansprüche 8 bis 15, wobei das Fleischprodukt als ein monolithisches Stück eines Schnitzels vorliegt, das vorzugsweise aus Schweinefleisch hergestellt ist.

17. Verfahren nach einem der Ansprüche 8 bis 16. weiter umfassend ein Kühlen oder Gefrieren des marinierten Fleischproduktes.

18. Verfahren nach einem der Ansprüche 8-17, weiter umfassend Kochen des marinierten Fleischproduktes.

19. Verfahren nach Anspruch 18, wobei das Kochen Grillen, Dampfkochen, Ofenkochen, Frittieren, in der Pfanne braten oder in der Mikrowelle zubereiten, umfasst.

20. Verwendung einer wie in einem der Ansprüche 1 bis 7 definierten Marinade, um die Zartheit eines Fleischproduktes zu verbessern.

## Revendications

1. Produit carné mariné, dans lequel la marinade de viande comprend une matière grasse et une protéine, dans lequel ladite matière grasse est de la graisse du lait et est présente en quantité de 0,5 à 10 pour cent en poids (% en poids) de la marinade, dans lequel ladite protéine est présente en quantité d'environ 0,05 à 10 pour cent en poids (% en poids) de la marinade, de préférence de 0,8 à 6 % en poids, mieux encore de 1 à 6 % en poids, et dans lequel la marinade ne contient pas d'amidon.

2. Produit carné mariné selon la revendication 1, dans lequel ladite protéine est une protéine animale.

3. Produit carné mariné selon la revendication 1, dans lequel ladite protéine est une protéine végétale.

4. Produit carné mariné selon l'une quelconque des revendications 1 à 3, dans lequel ladite marinade comprend au moins un produit laitier de préférence un produit laitier non fermenté.

5. Produit carné mariné selon la revendication 4, dans lequel ledit produit laitier est sélectionné dans le groupe constitué des produits suivants : crème, crème fraîche épaisse, crème à fouetter, lait entier, mélange mi-crème mi-lait (crème de lait), concentré de protéines de petit lait et lait entier évaporé.

6. Produit carné mariné selon l'une quelconque des revendications 1 à 5, comprenant en outre un agent aromatisant, de préférence un agent aromatisant sélectionné dans le groupe constitué des agents suivants : extraits aromatisants, concentrés aromatisants, exhausteurs de goût, assaisonnements, herbes, épices, sel, poivre, oignon en poudre, ail en poudre, sarriette en poudre et arômes disponibles dans le commerce.

7. Produit carné mariné selon l'une quelconque des revendications 1 à 6, dans lequel ladite marinade est transparente.

8. Procédé pour améliorer la tendreté d'un produit carné, comprenant la mise en contact dudit produit carné avec une marinade telle que définie dans l'une quelconque des revendications 1 à 7.

9. Procédé selon la revendication 8, dans lequel ladite mise en contact comprend le barattage, le mélange, le culbutage ou l'agitation dudit produit carné avec la marinade.

10. Procédé selon la revendication 8, dans lequel ladite mise en contact comprend l'injection dudit produit carné avec ladite marinade, éventuellement suivie d'un culbutage dudit produit carné.

11. Procédé selon l'une quelconque des revendications 8 à 9, dans lequel ledit produit carné est mis en contact avec une quantité de marinade de 10 à 50 pour cent en poids (% en poids) dudit produit carné, de préférence de 15 à 40 % en poids, mieux encore de 15 à 30 % en poids.

12. Procédé selon l'une quelconque des revendications 8 à 11, dans lequel ledit produit carné est un produit carné de porc, de boeuf, d'agneau, de gibier, de mouton, de veau or de volaille, de préférence un produit carné monolithique.

13. Procédé selon l'une quelconque des revendications 8 à 12, dans lequel ledit produit carné est un produit carné frais, réfrigéré ou congelé et décongelé.

14. Procédé selon l'une quelconque des revendications 8 à 13, dans lequel le produit carné se présente sous la forme de tranches, de fragments ou de cubes.

15. Procédé selon l'une quelconque des revendications 8 à 14, dans lequel ledit produit carné est un produit carné de la taille de bouchées ou d'en-cas.

16. Procédé selon l'une quelconque des revendications 8 à 15, dans lequel ledit produit carné est une pièce monolithique d'une escalope (Schnitzel), de préférence une escalope de viande de porc.

17. Procédé selon l'une quelconque des revendications 8 à 16, comprenant en outre la réfrigération ou la congélation dudit produit carné mariné.

18. Procédé selon l'une quelconque des revendications 8 à 17, comprenant en outre la cuisson dudit produit carné mariné.

19. Procédé selon la revendication 18, dans lequel ladite cuisson comprend la cuisson au grill, la cuisson à la vapeur, la cuisson au four, la friture en friteuse, la friture à la poêle ou la cuisson au four à micro-ondes.

20. Utilisation d'une marinade selon l'une quelconque des revendications 1 à 7 pour améliorer la tendreté d'un produit carné.
